# EUROPÄISCHE PATENTSCHRIFT

(11) **EP 2 032 414 B1**
(45) Veröffentlichungstag und Bekanntmachung des Hinweises auf die Patenterteilung: **12.05.2010**
(21) Anmeldenummer: 07723259.3
(22) Anmeldetag: 14.03.2007
(51) Int. Cl.: B62D 5/06

(54) **ENTLÜFTUNG EINES HYDRAULISCHEN LENKSYSTEMS**
BLEEDING SYSTEM FOR A HYDRAULIC STEERING SYSTEM
PURGE D'AIR D'UN SYSTÈME DE BRAQUAGE HYDRAULIQUE

(30) Priorität: 28.06.2006 DE 102006030125
(43) Veröffentlichungstag der Anmeldung: 11.03.2009
(73) Patentinhaber: ThyssenKrupp Presta SteerTec GmbH, 40476 Düsseldorf (DE)
(72) Erfinder: KOLLMEIER, Roger, 70329 Stuttgart (DE)
(74) Vertreter: Lenzing Gerber Stute
(86) Internationale Anmeldenummer: PCT/EP2007/002254
(87) Internationale Veröffentlichungsnummer: WO 2008/000307

(56) Entgegenhaltungen:
- DE-A1- 4 419 213
- FR-A- 2 853 023
- GB-A- 2 074 271

## Beschreibung

Die vorliegende Erfindung betrifft einen hydraulischen Arbeitszylinder nach dem Oberbegriff des Anspruch 1.

Ein gattungsgemäßer Arbeitszylinder ist aus der DE 44 19 214 A1 bekannt, bei der ein Ring mit einer umlaufenden Nut in der Mantelfläche des Rings im Arbeitszylinder angeordnet ist, wobei die Nut mit einem Leitungsanschluss in Verbindung ist, und der Ring im oberen Bereich eine sich in axialer Richtung erstreckende Aussparung aufweist, die die axiale Begrenzungswandung der Nut des Rings durchgreift, derart, dass der obere Bereich der Nut mit dem oberen Bereich des Arbeitszylinders in Verbindung ist, so dass die sich im oberen Bereich des Arbeitszylinders angesammelte Luft über den Kanal aus dem Arbeitszylinder entlüftet werden kann.

Die Ausgestaltung des Rings ist aufwändig, wobei der Ring zusätzlich eine relativ große axiale Dicke aufweist.

Ferner ist aus der DE 31 15 273 ein Hydraulikdruckzylinder bekannt, bei dem zwei Ringe zur Bildung von zwei umlaufenden Kanälen verwendet werden. Der eine Ring bildet mit seiner umlaufenden äußeren Nut den Kanal zusammen mit der nicht bearbeiteten Zylinderinnenwandung des Hydraulikdruckzylinders. Der zweite Ring weist ebenfalls eine umlaufende äußere Nut auf und ist ähnlich wie der erste Ring ausgebildet, liegt jedoch in einer umlaufenden Nut der Innenwandung ein und verschließt diese.

Aus der DE 103 14 242 ist ebenfalls ein Servozylinder bekannt, bei der die unbearbeitete Innenwandung des Arbeitszylinders zusammen mit einem einliegenden Teil einen umlaufenden Kanal bildet, der an seiner Oberseite hin zum Arbeitsraum des Servozylinders geöffnet ist.

Der Erfindung liegt die Aufgabe zu Grunde, einen hydraulischen Arbeitszylinder mit Selbstentlüftung bereitzustellen, der aus einfach zu fertigenden Teilen besteht.

Diese Aufgabe wird mit einem hydraulischen Arbeitszylinder nach dem Anspruch 1 gelöst. Weitere vorteilhafte Ausgestaltungen ergeben sich durch die Merkmale der Unteransprüche.

Vorteilhaft bei dem erfindungsgemäßen Arbeitszylinder ist, dass der Ring einfach in seiner Herstellung ist, und die Nut in der Innenwandung des Arbeitszylinders leicht mit dem Herstellungsprozess zur Herstellung des Arbeitszylinders gefertigt werden kann.

Die Verbindung der Nut mit dem Arbeitszylinder im oberen Bereich desselben erfolgt durch eine zumindest partielle Abflachung des Rings.

Die Anordnung des Leitungsanschlusses ist prinzipiell beliebig. Der Ring muss hierfür nicht gesondert gefertigt werden. Hierdurch ergibt sich vorteilhaft ein großer Spielraum für die Anordnung des Leitungsanschlusses, wobei der Ring in seiner Ausgestaltung nicht verändert werden muss. Hierdurch ist der Ring für verschiedenste Ausführungen von Lenkungen universell einsetzbar.

Auch ist es möglich, den Ring in ein Dichtelement für den Arbeitszylinder zu integrieren oder dass ein Dichtelement die Funktion des Rings mit übernimmt, in dem es entsprechend des Rings im oberen Bereich ausgestaltet ist.

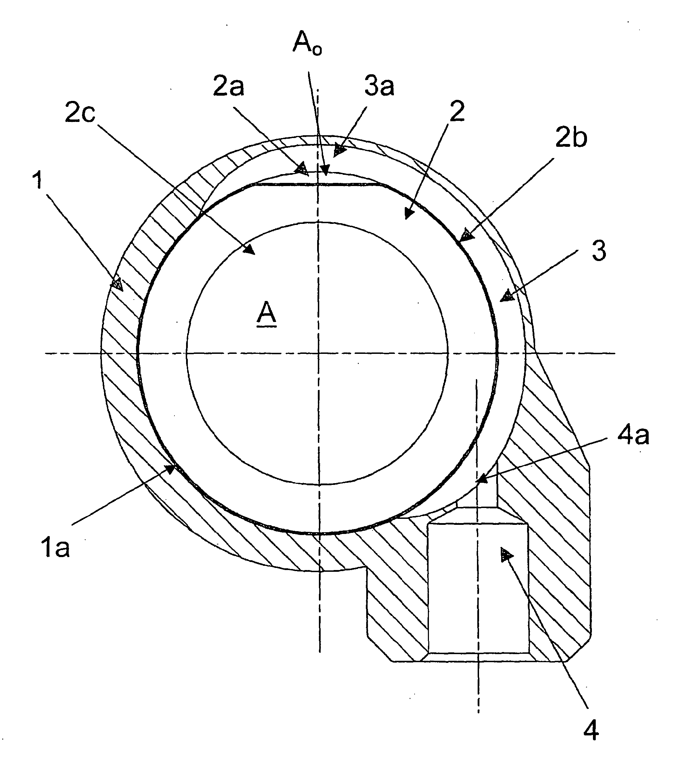

Nachfolgend wird anhand der Zeichnung eine mögliche Ausgestaltung des erfindungsgemäßen hydraulischen Arbeitszylinders erläutert.

Der obere Bereich Aₒ des Arbeitsraums A und der dazugehörige Ölleitungsanschluss 4 sind mittels eines Kanals 3 miteinander verbunden. Der Kanal 3 ist durch eine Nut 3, die in der Innenwandung 1a des Arbeitsraums A angeordnet, insbesondere eingearbeitet, ist, gebildet, welche mittels eines Rings 2 abgedeckt bzw. gegenüber dem Arbeitsraum A verschlossen ist. Der Ring 2 weist im oberen Bereich 2a eine Abflachung auf, so dass der Arbeitsraum A mit dem Kanalbereich 3a verbunden ist. Die Verbindung kann auch in einer alternativen Ausführungsform mittels einer Bohrung realisiert sein, welche im Ring 2 in dessen oberen Bereich angeordnet ist.

Durch die vorbeschriebenen Ausführungsformen fließt das Hydrauliköl nur von dem oberen Bereich Aₒ des Arbeitsraumes A über die Nut zum Ölanschluss 4 an bzw. ab.

Alternativ kann der Ring auch in einem Dichtelement für den Arbeitsraum integriert werden. Auch ist es möglich, dass das Dichtelement die Funktion des Rings übernimmt, wobei dann die Nut im Bereich des Dichtelements angeordnet sein muss.

Die Lage des Ölanschlusses 4 kann ringsum den Arbeitsraum 4 des Lenkgetriebes angeordnet sein.

## Patentansprüche

1. Hydraulischer Arbeitszylinder (1) eines Lenksystems für Kraftfahrzeuge, in dem ein Kolben mit einer Kolbenstange verschiebbar angeordnet ist, wobei der Kolben den Arbeitszylinder in zwei Arbeitsräume unterteilt (A), und in die Arbeitsräume Leitungsanschlüsse (4) für die Zuleitung bzw. Ableitung des Druckmittels führen, wobei ein Ring (2) im Arbeitsraum (A) zur Bildung eines Kanals (3) angeordnet ist, und der Kanal (3) mit einem Leitungsanschluss (4) in Verbindung ist, wobei der Arbeitsraum (A) in seiner Innenwandung (1a) eine Nut (3) aufweist, die sich von der Öffnung (4a) des Leitungsanschlusses (4) bis zum oberen Bereich (Aₒ) des Arbeitsraumes (A) erstreckt, wobei der Ring (2) die Nut (3) bis auf einen oberen Bereich (3a) zum Arbeitsraum (A) hin verschließt, **dadurch gekennzeichnet, dass** der Ring (2) im oberen Bereich (2a) zumindest bereichsweise abgeflacht ist, derart, dass er mit seiner Mantelfläche (2b) nur im Bereich der Abflachung (2a) nicht an der Innenwandung (1a) des Arbeitszylinders (A) anliegt, und dass sich die Nut (3) in der Innenwandung (1a) des Arbeitszylinders (A) nur über einen Teil des gesamten Umfangs der Innenwandung, insbesondere über einen Umfangsbereich von 90 bis 250 Grad, insbesondere 120 bis 180 Grad erstreckt.

2. Hydraulischer Arbeitszylinder nach Anspruch 1, **dadurch gekennzeichnet, dass** der Ring im Dichtelement für den Arbeitsraum integriert ist.

3. Hydraulischer Arbeitszylinder nach Anspruch 1 oder 2, **dadurch gekennzeichnet, dass** der Ring ein Dichtelement ist.

4. Hydraulischer Arbeitszylinder nach den Ansprüchen 1 bis 3, **dadurch gekennzeichnet, dass** der Ring in einem Radialwellendichtring integriert oder als Radialwellendichtring ausgebildet ist.

## Claims

1. Hydraulic working cylinder (1) of a steering system for motor vehicles, in which a piston with a piston rod is arranged displaceably, wherein the piston divides the working cylinder into two working chambers (A), and line connections (4) lead into the working chambers for the supply and extraction of the pressure medium, wherein a ring (2) is arranged in the working chamber (A) for formation of a channel (3), and the channel (3) is connected to a line connection (4), wherein the working chamber (A) has in its inner wall (1) a groove (3) which extends from the opening (4a) of the line connection (4) to the upper region (Aₒ) of the working chamber (A), wherein the ring (2) closes the groove (3) up to an upper region (3a) against the working chamber (A), **characterised in that** the ring (2) is flattened at least partially in the upper region (2a) such that with its casing surface (2b) it does not lie on the inner wall (1) of the working cylinder only in the region of the flattening (2a) and **in that** the groove (3) in the inner wall (1a) of the working cylinder extends only over a part of the total periphery of the inner wall, in particular over a peripheral range of 90 to 250 degrees, in particular 120 to 180 degrees.

2. Hydraulic working cylinder according to claim 1, **characterised in that** the ring is integrated in the sealing element for the working chamber.

3. Hydraulic working cylinder according to claim 1 or 2, **characterised in that** the ring is a sealing element.

4. Hydraulic working cylinder according to claims 1 to 3, **characterised in that** the ring is integrated in a radial shaft sealing ring or is formed as a radial shaft sealing ring.

## Revendications

1. Cylindre de travail hydraulique (1) d'un système de direction pour véhicules automobiles, dans lequel est agencé, de manière coulissante, un piston comprenant une tige de piston, le piston subdivisant le cylindre de travail en deux chambres de travail (A), et des raccords de branchement de conduite (4) pour l'alimentation et respectivement l'évacuation du fluide de pression menant dans les chambres de travail, cylindre de travail dans lequel est par ailleurs prévu un anneau (2) agencé dans la chambre de travail (A) pour former un canal (3), et le canal (3) est en communication avec un raccord de branchement de conduite (4), la chambre de travail (A) présentant dans sa paroi intérieure (1a), une rainure (3) qui s'étend de l'orifice (4a) du raccord de branchement de conduite (4) jusqu'à la zone supérieure (Aₒ) de la chambre de travail (A), l'anneau (2) fermant la rainure (3) vers la chambre de travail (A) à l'exception d'une zone supérieure (3a), **caractérisé en ce que** l'anneau (2) présente un méplat, au moins par endroits, dans sa zone supérieure (2a), de façon à s'appuyer, avec sa surface enveloppe périphérique (2b), contre la paroi intérieure (1a) du vérin de travail (A), sauf dans la zone du méplat (2a), et **en ce que** la rainure (3) dans la paroi intérieure (1a) du cylindre de travail (A) s'étend uniquement sur une partie de la totalité de la périphérie de la paroi intérieure, notamment sur une zone périphérique de 90 à 250 degrés, en particulier de 120 à 180 degrés.

2. Cylindre de travail hydraulique selon la revendication 1, **caractérisé en ce que** l'anneau est intégré à l'élément d'étanchéité pour la chambre de travail.

3. Cylindre de travail hydraulique selon la revendication 2, **caractérisé en ce que** l'anneau est un élément d'étanchéité.

4. Cylindre de travail hydraulique selon les revendications 1 à 3, **caractérisé en ce que** l'anneau est intégré à une bague d'étanchéité radiale à lèvres, ou est réalisé en tant que bague d'étanchéité radiale à lèvres.
